# EUROPÄISCHE PATENTSCHRIFT

(11) **EP 0 757 783 B1**
(45) Veröffentlichungstag und Bekanntmachung des Hinweises auf die Patenterteilung: **20.05.1998**
(21) Anmeldenummer: 95913136.8
(22) Anmeldetag: 16.03.1995
(51) Int. Cl.: G01F 11/34, G01F 11/00, B65D 81/32, A47K 5/10

(54) **Vorrichtung zur Bereitstellung eines aus mehreren Komponenten bestehenden Mittels**
DEVICE FOR PREPARING AN AGENT CONSISTING OF SEVERAL COMPONENTS
DISPOSITIF DE PREPARATION D'UN AGENT CONSTITUE DE PLUSIEURS COMPOSANTS

(30) Priorität: 18.04.1994 DE 4413317; 20.07.1994 DE 4425607
(43) Veröffentlichungstag der Anmeldung: 12.02.1997
(73) Patentinhaber: Chemolux S.à.r.l., L-3895 Foetz-Mondercange (LU)
(72) Erfinder: KRONWITTER, Christoph, L-2320 Luxembourg (LU)
(74) Vertreter: Becker, Maria, Dipl.-Phys.
(86) Internationale Anmeldenummer: EP9500983
(87) Internationale Veröffentlichungsnummer: WO9528621

(56) Entgegenhaltungen:
- EP-A- 0 004 198
- WO-A-91/08979
- DE-A- 1 617 084
- GB-A- 2 268 733
- US-A- 1 891 787
- US-A- 2 123 606
- US-A- 2 552 349

## Beschreibung

Die Erfindung betrifft eine Vorrichtung zur Bereitstellung eines aus mehreren Komponenten bestehenden Mittels, wie Waschmittel oder dgl., mit Vorratsbehältnissen, die die einzelnen Komponenten enthalten, gemäß dem Oberbegriff des Patentanspruchs 1.

Aus der DE-A 16 17 084 ist ein Seifenspender bekannt, mit mehreren Vorratsbehältnissen, die die einzelnen Waschmittelkomponenten enthalten und eine Dosiervorrichtung, die im wesentlichen aus einer Ausgabevorrichtung bestehend aus einem Ausgeber mit einem Kanal besteht, in den die kugelförmigen Seifenstücke rollen und der durch ein Absperrorgan in zwei Teilstücke unterteilt ist. Ein erstes Kanalteilstück ist stets durch die vorrätigen Seifenkugeln gefüllt und ein zweites Kanalteilstück ist nach außen offen. Bei Betätigung des Ausgebers, der den Kanal aufweist, wird der Kanal angehoben und gleichzeitig das zweite Teilstück durch die Gehäuseaußenwand verschlossen und das Absperrorgan aus dem Kanal entfernt. Dadurch füllt sich auch das zweite Kanalteilstück mit Seifenkugeln. Nach Loslassen des Ausgebers bewegt sich dieser wieder in die Ausgangsstellung zurück, wodurch der Kanal wieder durch das Absperrorgan in zwei Teilstücke aufgeteilt wird und das zweite Kanalteilstück nach außen geöffnet ist, so daß die in diesem Kanalteilstück befindliche Seifenkugel aus dem Seifenspender rollen kann.

Mehrere dieser Dosiervorrichtungen sind übereinander angeordnet, so daß die durch die einzelnen Dosiervorrichtungen freigegebenen Seifenlkugeln über einen an den Seifenspender angeformten Kanal aus dem Seifenspender herausrollen können.

Das Absperrorgan ist in einem Schlitz geführt. Es sind weitere Schlitze vorgesehen, so daß das Absperrorgan an diskrete Stellen versetzbar ist, so daß die Dosiervorrichtung auf die Abgabe einer bestimmten Anzahl von Seifenkugeln einstellbar ist.

Nachteilig an dieser bekannten Vorrichtung ist, daß sie ungeeignet für pulverförmiges Waschmittel, denn pulverförmiges Waschmittel rieselt beispielsweise durch die für das Absperrorgan vcrgesehenen Schlitze aus der Vorrichtung heraus. Des weiteren setzt sich pulverförmiges Waschmittel zwischen den Ausgeber und die Wandung des Führungsschlitzes für den Ausgeber fest, so daß der Ausgeber festklemmt. Weiter kann das Absperrorgan den Kanal nicht dicht genug verschließen, um ein Ausrieseln pulverförmigen Waschmittels zu verhindern. Darüber hinaus kann mit der bekannten Vorrichtung die zu entnehmende Waschmittelmenge nicht beliebig eingestellt werden. Aufgrund der konstruktiven Ausgestaltung mit dem in vorgegebenen Schlitzen geführten Absperrorgan sind nur diskrete, fest vorgegebene Waschmittelmengen entnehmbar.

Ausgehend von diesem Stand der Technik ist es Aufgabe der Erfindung, eine verbesserte Vorrichtung bereitzustellen, die die individuelle Zusammenstellung des Waschmittels mit möglichst wenigen Handgriffen ermöglicht, also einfach bedienbar ist und zuverlässig arbeitet und bei der die Waschmittelkomponenten in beliebigen Verhältnissen mischbar sind.

Es ist ein "Baukastensystem" für ein Waschmittel bekannt, bei dem der Kunde drei Komponenten eines Waschmittels - dies sind das eigentliche Waschmittel, Bleicher und Wasserenthärter - getrennt in drei Behältern kaufen kann. Die einzelnen Komponenten des Waschmittels werden dann je nach den äußeren Bedingungen, wie z.B. Wasserhärte oder Verschmutzungsgrad der Wäsche, in unterschiedlichen Gewichtsverhältnissen zusammengefügt. Die zuzugebende Menge einer Waschmittelkomponente wird mittels eines Meßbechers abgemessen. Die individuelle Zusammenstellung des Waschmittels nach den jeweiligen Bedingungen ist insbesondere im Hinblick auf die Umwelt vorteilhaft, da nicht mehr als die benötigte Menge der einzelnen Waschmittelkomponenten zum Einsatz kommmt.

Nachteilig ist jedoch, daß die Zusammenstellung des Waschmittels sehr umständlich ist und vom Anwender viele Handgriffe erfordert, denn aus drei Behältnissen ist jeweils eine bestimmte Menge abzumessen und zu einem Waschmittel zusammenzufügen.

Ausgehend von diesem Stand der Technik ist es Aufgabe der Erfindung eine Vorrichtung bereitzustellen, die die individuelle Zusammenstellung des Waschmittels mit möglichst wenigen Handgriffen ermöglicht, also einfach bedienbar ist und zuverlässig arbeitet, und bei der die Waschmittelkomponenten in vom Benutzer definierten Mischungsverhältnissen entnehmbar sind.

Diese Aufgabe wird gelöst durch eine Vorrichtung mit den Merkmalen des Anspruchs 1.

Die erfindungsgemäße Vorrichtung ist insbesondere für pulverförmiges Waschmittel geeignet, wobei die Einstellung der Dosiervorrichtung auf eine bestimmte Dosismenge in äußerst einfacher Weise durch Drehung der Wandung des Dosierelementes möglich ist. Die sich aus der Drehung der Wandung aufgrund der Höhenverstellung des Bodens ergebende Volumenänderung des Dosierelements erlaubt eine kontinuierliche Einstellung der Dosismenge entsprechend den individuellen Bedürfnissen des Anwenders, beispielsweise bei der Zusammensetzung eines Waschmittels bestehend aus dem eigentlichen Waschmittel, einem Bleicher un einem Wasserenthärter. Das Waschmittel hat dann immer die vom Benutzer gewünschte, korrekte Zusammensetzung.

Ansprüche 2 bis 11 beschreiben vorteilhafte einfache Ausgestaltungen der Dosiervorrichtung.

Um das Dosierelement einfach nachfüllen und entleeren zu können ist der Boden des Dosierelements zwischen einer Nachfüllstellung, in der die Komponente aus dem Vorratsbehältnis in das Dosierelement gelangt, und einer Entleerstellung, in der das Dosierelement in das Entnahmeelement entleerbar ist, vertikal verschiebbar.

Damit das Dosierelement selbsttätig nachgefüllt wird, ist der Boden gemäß Anspruch 3 mittels wenigstens eines Rückstellelements selbsttätig in die Nachfüllstellung bringbar.

Um die Dosiervorrichtung einfach bedienen zu können, ist das Dosierelement über eine Handhabe gemäß Anspruch 4 und 5 entleerbar.

Weitere vorteilhafte Ausgestaltungen der Dosiervorrichtung sind Gegenstand der Ansprüche 6 und 7.

Um jede Komponente einzeln dosieren zu können ist nach Anspruch 8 jedem Vorratsbehälter eine Dosiervorrichtung zugeordnet, wobei sich eine einfache Bedienung ergibt, wenn die Dosiervorrichtungen gemäß Anspruch 9 mit der Handhabe gleichzeitig betätigbar sind.

Weitere vorteilhafte Ausgestaltungen sind Gegenstand der Ansprüche 10 und 11.

Im folgenden soll die Erfindung anhand eines Ausführungsbeispiels unter Bezugnahme auf die Zeichnung im einzelnen beschrieben werden. Es zeigen:
- Figur 1: ein Ausführungsbeispiel der erfindungsgemäßen Vorrichtung, wobei ein Teil der Vorrichtung im Schnitt dargestellt ist,
- Figur 2: eine perspektivische Ansicht der Vorrichtung nach Figur 1.

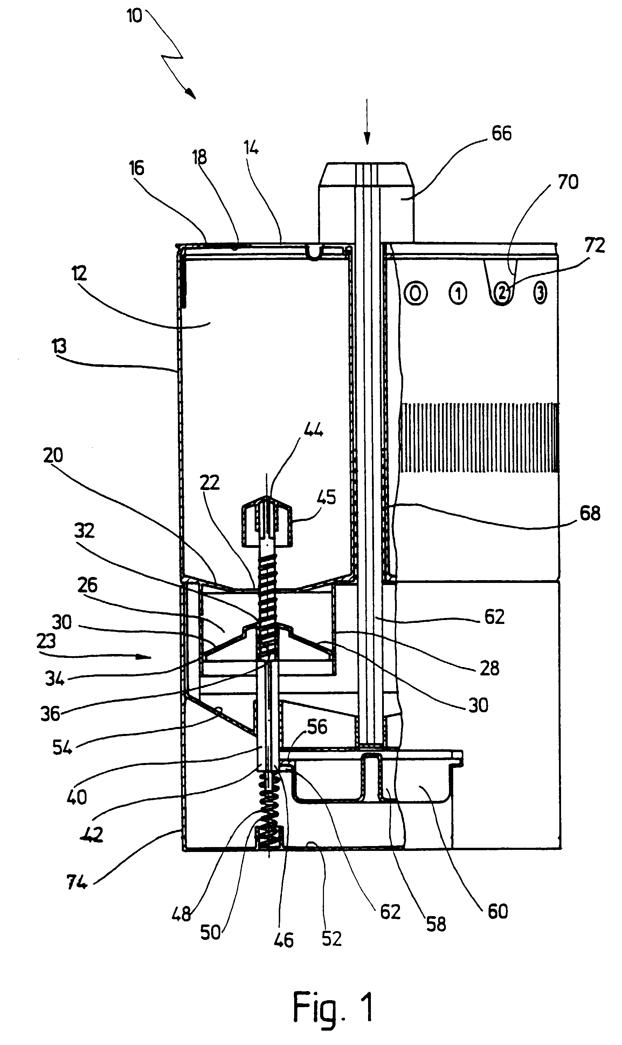

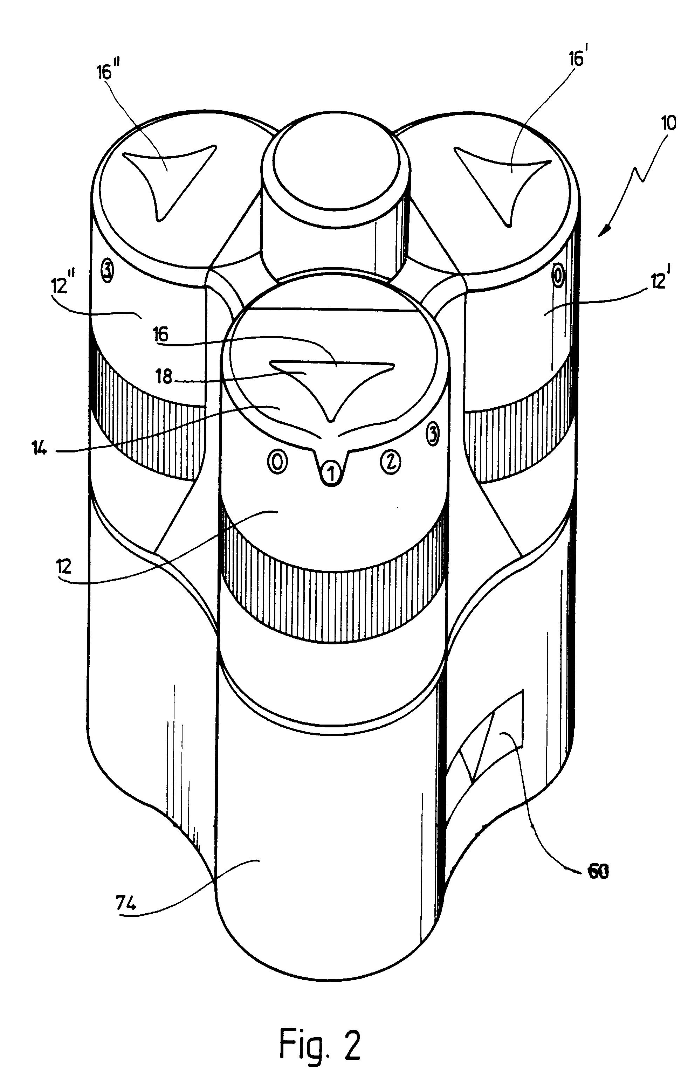

Ein in Figur 1 und 2 dargestelltes Ausführungsbeispiel der erfindungsgemäßen Vorrichtung 10 weist mehrere, vorzugsweise drei, zylindersymmetrische Vorratsbehältnisse 12, 12' und 12" zur Aufnahme von Komponenten, beispielsweise Komponenten eines Waschmittels, wie das eigentliche Waschmittel, Wasserenthärter und Bleichmittel, auf. Die Komponenten können beispielsweise in Pulverform vorliegen. Die Symmetrieachsen der Vorratsbehältnisse 12, 12' und 12" im folgenden kurz Behältnisse genannt, sind parallel zueinander angeordnet.

Das in Figur 1 im Schnitt dargestellte Behältniss 12 besteht im wesentlichen aus einem Rohr 13, das um seine Symmetrieachse drehbar gelagert und mit einem Deckel 14 verschlossen ist. Der Deckel 14 weist eine Öffnungen 16 auf, an die ein Nachfüllbehälter anschließbar ist zum Nachfüllen des entleerten Behältnisses 12 mit der jeweiligen Komponente. Wenn der Nachfüllbehälter nicht angeschlossen ist, ist die Öffnung 16 durch ein in die Öffnung eingreifendes Verschlußelement 18 verschlossen. Nach unten ist das Rohr 13 abgeschlossen durch einen Boden 20, der trichterförmig ausgeformt ist und in der Mitte eine kreisförmige Öfnung 22 aufweist. Unterhalb des Behältnisses 12 befindet sich eine Dosiervorrichtung 23. Die Dosiervorrichtung 23 weist ein an die Unterseite 24 des Bodens 20 fest angebrachtes Dosierelement 26 auf, das gebildet ist aus einer ebenfalls zylindersymmetrischen Wandung 28, die im Durchmesser etwas kleiner ist als der Durchmesser des Rohres 13. Die Symmetrieachse des Rohres 13 und des Dosierelements 26 sind identisch.

Das Dosierelement 26 ist nach unten abgeschlossen durch einen Boden 30, dessen Form dem eines Konus entspricht, so daß der Boden von der Mitte 32 aus zum Rand 34 hin schräg nach unten abfällt. Der Boden 30 ist mit der Wandung 28 lediglich drehfest in nicht dargestellter Weise verbunden. Der Boden 30 ist jedoch in der Vertikalen entlang der Wandung 28 verschiebbar.

Der Boden 30 weist in der Mitte eine ein Gewinde 36 aufweisende Öffnung 38 auf, in die ein Betätigungs- und Einstellmittel 40, wie beispielsweise eine Stange 42, eingeschraubt ist. Die Stange 42 ist drehfest aber axial verschiebbar in der Vorrichtung 10 gelagert und erstreckt sich mit ihrem oberen Ende 44 bis in das Behältnis 12 hinein. An ihrem unteren Ende 46 ruht die Stange 42 auf einem Rückstellmittel 48, das vorzugsweise gebildet ist aus einer Schraubenfeder 50, auf. Die Schraubenfeder 50 wiederum ruht auf dem Boden 52 der Vorrichtung 10 auf. Das obere Ende 44 der Stange 42 weist einen Verschluß 45 auf, mit dem die Öffnung 22 im Boden 20 des Behältnnisses 12 verschließbar ist, wenn die Dosiervorrichtung 23 betätigt wird.

Weiter weist die Dosiervorrichtung 23 eine unterhalb des Dosierelementes 26 gelegene, zur Mitte der Vorrichtung 10 hin geneigte Führungsfläche 54 auf, dessen unterer Rand 56 an ein Entnahmeelement 58 angrenzt. Das Entnahmeelement 58 befindet sich in der Mitte der Vorrichtung 10, und ist als eine Schublade 60 ausgebildet, dessen Führungsschienen 62 an dem unteren Ende 46 der Stange 42 befestigt sind.

Weiter umfaßt die Vorrichtung 10 einen in der Mitte des Entnahmeelements 58 aufruhenden und sich vertikal durch die Vorrichtung 10 erstreckenden Betätigungshebel 62, dessen oberes Ende 64 über den Deckel 14 hinausragt und einen Knopf 66 aufweist. Der Betätigungshebel kann mit einem weiteren Rückstellmittel 68, beispielsweise einer Schraubenfeder, ausgestattet sein.

Die erfindungsgemäße Vorrichtung funktioniert wie folgt:

Zunächst werden durch die Öffnungen 16, 16', und 16" die Behältnisse 12, 12' und 12" mit den jeweiligen Komponenten gefüllt. Nun kann die gewünschte Dosismenge für jede Komponente eingestellt werden, indem durch Drehen des Rohres 13 und damit Drehen der Wandung 28 und des Bodens 30 der Boden 30 in der vertikalen Stellung auf der Stange 42 variierbar ist. Dadurch ändert sich das Volumen des Dosierelementes 26 entsprechend. Die Komponente gelangt dann zunächst durch die Öffnung 22 in das Dosierelement 26.

Durch Drücken des Knopfes 66 wird der Betätigungshebel 62 nach unten bewegt und damit ebenso das Entnahmeelement 58. Da das Entnahmeelement über die Führungsschienen mit der Stange 42 verbunden ist, wird auch die Stange 42 nach unten bewegt, wodurch zunächst der Verschluß 45 die Öffnung 22 verschließt, so daß kein weiteres Material mehr in das Dosierelement 26 gelangen kann. Dann wird der Boden 30 durch die Stange weiter nach unten bewegt, so daß der Rand 34 des Bodens 30 sich unterhalb des unteren Randes 29 der Wandung 28 befindet. Dies ist die Entleerstellung des Bodens des Dosierelements 26. Nun fließt die Komponente über den Rand 34 des Bodens 30 ab und fließt über die Führungsfläche 54 in das Entnahmeelement 58.

Nach Loslassen des Knopfes 66 wird der Boden 30 des Dosierelements 26 und damit die Dosiervorrichtung 23 selbsttätig durch die Rückstellmittel 48 und 68 wieder in die Nachfüllstellung gebracht, wobei nun in umgekehrter Reihenfolge zunächst der Rand 34 des Bodens 30 wieder mit der Wandung 28 in Berührung kommt und dann der Verschluß 45 die Öffnung 22 freigibt, so daß die Komponente in das Dosierelement 26 nachfließt.

Für jede Komponente ist eine Dosiervorrichtung 23 vorgesehen, so daß jede Komponente in das Entnahmeelement 58 unabhängig von den anderen Komponenten dosiert werden kann. Die in dem Entnahmeelement 58 zusammengefügten Komponenten können dann ihrem Verwendungszweck zugeführt werden. Die Dosiervorrichtungen 23 sind durch eine äußere Wand 74 verkleidet.

Um die Einstellung der Dosiervorrichtung 23 ablesen zu können, ist der Rand des drehfesten Deckels 14 etwas nach unten gezogen und weist Makierungen 72 auf. Weiter ist das Rohr 13 an seinem oberen Rand mit einer Ausparung 70 versehen, so daß die Verdrehstellung des Rohres 13 und damit die Einstellung der Dosiervorrichtung 23 mit Hilfe der jeweiligen Markierung 72 ablesbar ist.

In weiterer Ausgestaltung der Erfindung kann die Einstellung der Dosiervorrichtung durch eine in der Zeichnung nicht dargestellte Rastvorrichtung verrastet werden. Ein versehentliches Verstellen der Dosiervorrichtung ist damit verhindert.

## Patentansprüche

1. Vorrichtung zur Bereitstellung eines aus mehreren Komponenten bestehenden Mittels, wie Waschmittel oder dgl., mit die einzelnen Komponenten enthaltenen Vorratsbehältnissen (12, 12', 12"), mit wenigstens einer Dosiervorrichtung (23), mit der eine der Komponenten aus dem Vorratsbehältnis (12) über ein Dosierelement (26) in ein Entnahmeelement (58) einfüllbar ist, wobei das Volumen des Dosierelements (26) zur Erhaltung unterschiedlicher, definierter Dosismengen individuell einstellbar ist,
**dadurch gekennzeichnet, daß**
ein Boden (30) des Dosierelements (26) drehfest mit einer in der Vorrichtung um eine vertikale Achse drehbaren Wandung (28) des Dosierelements (26) verbunden ist und ein vertikal ausgerichtetes, drehfest gelagertes Betätigungs- und Einstellmittel (40) in den Boden des Dosierelements (26) eingeschraubt ist, so daß durch Drehen der Wandung (28) gleichzeitig der Boden (30) in der Vertikalen verstellbar ist, wodurch das Volumen des Dosierelements (26) veränderbar ist.

2. Vorrichtung nach Anspruch 1, dadurch gekennzeichnet, daß der Boden (30) des Dosierelements (26) zwischen einer Nachfüllstellung, in der die Komponente aus dem Vorratsbehältnis (12) in das Dosierelement (26) gelangt, und einer Entleerstellung, in der das Dosierelement (26) in das Entnahmeelement (58) entleerbar ist, vertikal verschiebbar ist.

3. Vorrichtung nach Anspruch 1 oder 2, dadurch gekennzeichnet, daß der Boden (30) mittels wenigstens eines Rückstellelements (48, 68) selbsttätig in die Nachfüllstellung bringbar ist.

4. Vorrichtung nach einem der vorhergehenden Ansprüche, dadurch gekennzeichnet, daß die Dosiervorrichtung (23) durch eine Handhabe (62 und 66) betätigbar ist.

5. Vorrichtung nach Anspruch 4, dadurch gekennzeichnet, daß die Handhabe (62 und 66) über das Entnahmeelement (58) mit dem Betätigungs- und Einstellmittel (40) verbunden ist.

6. Vorrichtung nach einem der vorhergehenden Ansprüche, dadurch gekennzeichnet, daß die Wandung (28) des Dosierelements (26) fest mit dem Vorratsbehältnis (12) verbunden ist.

7. Vorrichtung nach einem der vorhergehenden Ansprüche, dadurch gekennzeichnet, daß das Entnahmeelement (58) als eine Schublade (60) ausgestaltet ist.

8. Vorrichtung nach einem der vorhergehenden Ansprüche, dadurch gekennzeichnet, daß jedem Vorratsbehältnis (12, 12', 12") eine einzeln einstellbare Dosiervorrichtung (23) zugeordnet ist.

9. Vorrichtung nach Anspruch 8, dadurch gekennzeichnet, daß mittels der Handhabe (62 und 66) sämtliche Dosiervorrichtungen (23) gleichzeitig betätigbar sind.

10. Vorrichtung nach einem der vorhergehenden Ansprüche, dadurch gekennzeichnet, daß die Einstellung der Dosiervorrichtung (23) zum Erhalt einer bestimmten Dosismenge an einer Anzeige (70 und 72) ablesbar ist.

11. Vorrichtung nach einem der vorhergehenden Ansprüche, dadurch gekennzeichnet, daß die Einstellung der Dosiervorrichtung zum Erhalt einer bestimmten Dosismenge über eine Rastvorrichtung feststellbar ist.

## Claims

1. Device for preparing an agent consisting of several components, such as a detergent or the like, comprising supply vessels (12, 12', 12") with at least one dosing device (23), by means of which the different components can be transferred from the supply vessel (12) via a dosing element (26) into a withdrawal element (58), the volume of said dosing element (26) being adjustable individually for providing different, defined dosage volumes,
characterized in that
a bottom (30) of said dosing element (26) is connected to rotate together with a wall (28) of said dosing element (26), being mounted in said device for rotation about a vertical axis, and that vertically aligned operating and adjusting means (40) are screwed into the bottom of said dosing element (26) to rotate therewith so that by rotating said wall (28) said bottom (30) can be simultaneously adjusted vertically, whereby the volume of said dosing element (26) can be varied.

2. Device according to claim 1, characterized in that said bottom (30) of said dosing element (26) can be vertically displaced between a refilling position, in which the component is transferred from said supply vessel (12) to said dosing element (26), and a discharging position, in which the content of said dosing element (26) can be discharged into said withdrawal element (58).

3. Device according to claim 1 or claim 2, characterized in that said bottom (30) can be moved automatically into the refilling position by means of at least one return element (48, 68).

4. Device according to one of the preceding claims, characterized in that said dosing element (23) can be operated by means of a handle (62 and 66).

5. Device according to claim 4, characterized in that said handle (62 and 66) is connected with said operating and adjusting means (40) via said withdrawal element (58).

6. Device according to one of the preceding claims, characterized in that said wall (28) of said dosing element (26) is fixed to said supply vessel (12).

7. Device according to one of the preceding claims, characterized in that said withdrawal element (58) takes the form of a drawer (60).

8. Device according to one of the preceding claims, characterized in that each supply vessel (12, 12', 12") has associated to it an individually adjustable dosing device (23).

9. Device according to claim 8, characterized in that all dosing devices (23) can be operated simultaneously by means of said handle (62 and 66).

10. Device according to one of the preceding claims, characterized in that the adjustment of said dosing device (23), providing a given dosage volume, can be read at indication means (70 and 72).

11. Device according to one of the preceding claims, characterized in that the adjustment of the dosing device, providing a given dosage volume can be retained by means of a locking mechanism.

## Revendications

1. Dispositif de préparation d'un agent constitué de plusieurs composants, tel qu'un agent de lavage ou similaire, avec des récipients de stockage (12, 12', 12") contenant les différents composants, avec au moins un dispositif de dosage (23) permettant de verser l'un des composants du récipient de stockage (12) à travers un élément de dosage (26) dans un élément de soutirage (58), le volume de l'élément de dosage (26) pouvant être réglé individuellement pour conserver des quantités de dosage définies variées,
**caractérisé en ce que**
le fond (30) de l'élément de dosage (26) est relié de façon résistante à la torsion avec une paroi (28) de l'élément de dosage (26) mobile autour d'un axe vertical dans le dispositif et qu'un moyen d'actionnement et de réglage (40) résistant à la torsion et aligné à la verticale est vissé dans le fond de l'élément de dosage (26), de manière que, en tournant la paroi (28), le fond (30) est réglable simultanément à la verticale, le volume de l'élément de dosage (26) étant ainsi variable.

2. Dispositif selon la revendication 1, caractérisé en ce que le fond (30) de l'élément de dosage (26) est déplaçable verticalement entre une position de remplissage dans laquelle le composant est transféré du récipient de stockage (12) dans l'élément de dosage (26) et une position de vidage dans laquelle l'élément de dosage (26) peut être vidé dans l'élément de soutirage (58).

3. Dispositif selon la revendication 1 ou 2, caractérisé en ce que le fond (30) peut être placé automatiquement en position de remplissage au moyen d'au moins un élément de rappel (48, 68).

4. Dispositif selon l'une des revendications précédentes, caractérisé en ce que le dispositif de dosage (23) est actionnable par un manipulateur (62 et 66).

5. Dispositif selon la revendication 4, caractérisé en ce que le manipulateur (62 et 66) est relié, à travers l'élément de vidage (58), avec le moyen d'actionnement et de réglage (40).

6. Dispositif selon l'une des revendications précédentes, caractérisé en ce que la paroi (28) de l'élément de dosage (26) est relié à demeure avec le récipient de stockage (12).

7. Dispositif selon l'une des revendications précédentes, caractérisé en ce que l'élément de soutirage (58) a la forme d'un tiroir (60).

8. Dispositif selon l'une des revendications précédentes, caractérisé en ce que chaque récipient de stockage (12, 12', 12") est affecté à un dispositif de dosage (23) réglable séparément.

9. Dispositif selon la revendication 8, caractérisé en ce que tous les dispositifs de dosage (23) peuvent être actionnés simultanément au moyen du manipulateur (62 et 66).

10. Dispositif selon l'une des revendications précédentes, caractérisé en ce que le réglage du dispositif de dosage (23) peut être lu sur un indicateur (70 et 72) pour maintenir un volume de dose défini.

11. Dispositif selon l'une des revendications précédentes, caractérisé en ce que le réglage du dispositif de dosage pour maintenir un volume de dose défini peut être bloqué au moyen d'un dispositif de blocage.
